(19) Europäisches Patentamt
European Patent Office
Office européen des brevets

(11) **EP 3 207 457 B1**

(12) **EUROPEAN PATENT SPECIFICATION**

(45) Date of publication and mention
of the grant of the patent:
**25.11.2020  Bulletin 2020/48**

(21) Application number: **15797398.3**

(22) Date of filing: **06.10.2015**

(51) Int Cl.:
***G06F 12/0811*** *(2016.01)*

(86) International application number:
**PCT/IB2015/001980**

(87) International publication number:
**WO 2016/059469 (21.04.2016 Gazette 2016/16)**

(54) **HIERARCHICAL CACHING FOR ONLINE MEDIA**

HIERARCHISCHE CACHESPEICHERUNG FÜR ONLINE-MEDIEN

MISE EN ANTÉMÉMOIRE HIÉRARCHIQUE POUR DES MÉDIAS EN LIGNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.10.2014  US 201462064631 P
19.12.2014  US 201414577039**

(43) Date of publication of application:
**23.08.2017  Bulletin 2017/34**

(73) Proprietor: **Alcatel Lucent
91620 Nozay (FR)**

(72) Inventors:
• **AKHTAR, Shahid**
  **Plano, Texas 75075-7839 (US)**
• **BECK, Andre**
  **Naperville, Illinois 60563-1594 (US)**
• **MURRAY, Rob**
  **Cambridge CB24 6DD (GB)**
• **RIMAC, Ivica**
  **70435 Stuttgart (DE)**

(74) Representative: **MERH-IP Matias Erny Reichl
Hoffmann
Patentanwälte PartG mbB
Paul-Heyse-Strasse 29
80336 München (DE)**

(56) References cited:
**US-A1- 2014 280 679    US-B1- 8 312 181**

• **MELAZZI N BLEFARI ET AL: "A General,
Tractable and Accurate Model for a Cascade of
LRU Caches", IEEE COMMUNICATIONS
LETTERS, IEEE SERVICE CENTER,
PISCATAWAY, NJ, US, vol. 18, no. 5, 1 May 2014
(2014-05-01), pages 877-880, XP011548683, ISSN:
1089-7798, DOI:
10.1109/LCOMM.2014.031414.132727 [retrieved
on 2014-05-19]**
• **AHLEHAGH HASTI ET AL: "Video-Aware
Scheduling and Caching in the Radio Access
Network", IEEE / ACM TRANSACTIONS ON
NETWORKING, IEEE / ACM, NEW YORK, NY, US,
vol. 22, no. 5, 1 October 2014 (2014-10-01), pages
1444-1462, XP011561603, ISSN: 1063-6692, DOI:
10.1109/TNET.2013.2294111 [retrieved on
2014-10-13]**

**Description**

**BACKGROUND**

1. Field

Example embodiments relate generally to caching media, and particularly to providing hierarchical caching for online media.

2. Related Art

Online video is presently the largest component, or one of the largest components, of internet traffic. Caching such video adds additional requirements on traditional algorithms. For many conventional algorithms, hit-rate has traditionally been the key performance metric used to compare such algorithms. Increasingly newer caches use SSD memory for storage due to SSD memory's access speed and reliability. A lifetime of SSD memory may have a limited number of write cycles available. Replacement rate, or the number of write cycles per request is another key performance metric that may be of interest with such memory. According to some online video usage data, a significant part of the online video is used to rebroadcast recent TV shows which are initially quite popular but rapidly drop in popularity. Measuring the performance of caching algorithms with such rapid changes is another new performance metric. Typically online caching stores the video in small chunks of typically between 2 and 10 seconds. Further each video may be encoded into multiple video quality levels further increasing the number of chunks per video. In all, online video can increase the number of files that can be requested by end users in a caching system by a thousand fold or more.

Many conventional caching algorithms proposed in research over the last 30 years have not been implemented in commercial caches. For example, prominent examples of implemented schemes include simple schemes like the least recently used (LRU) and a few others like greedy dual size frequency (GDSF) and least frequently used with dynamic aging (LFU-DA).

D1 US 2014/280679 A1 discloses a method for delivering video data from a server in the CDN in in a wireless network comprising a wireless carrier core network (CN), and a radio access network (RAN).

D2 MELAZZI N BLEFARI ET AL: "A General, Tractable and Accurate Model for a Cascade of LRU Caches" discloses a general, tractable and accurate model for a cascade of LRU caches.

D3 US 8 312 181 B1 discloses various techniques for initiating read-ahead requests.

D4 AHLEHAGH HASTI ET AL: "Video-Aware Scheduling and Caching in the Radio Access Network" discloses RAN-aware reactive and proactive caching policies that utilize User Preference Profiles (UPPs) of active users in a cell and corresponding scheduling techniques.

**SUMMARY**

According to one or more example embodiments, a method includes receiving, at a first cache device, a request to send a first asset to a second device; determining whether the first asset is stored at the first cache device; when the determining whether the first asset is stored at the first cache device indicates that first asset is not stored at the first cache device, obtaining, at the first cache device, the first asset, performing a comparison operation based on an average inter-arrival time of the first asset with respect to the first cache device and a characteristic time of the first cache device, the characteristic time of the first cache device being an average period of time assets cached at the first cache device are cached before being evicted from the first cache device, and determining whether or not to cache the obtained first asset at the first cache device based on the comparison; and sending the obtained first asset to the second device.

The first cache may be one of a plurality of cache devices of a content distribution network, the plurality of cache devices being divided into a plurality of hierarchy levels, and the method may further include for each cache device of each hierarchy level, from among the plurality of cache devices divided into the plurality of hierarchy levels, determining, with respect to the cache device, an average inter-arrival time of a requested asset, when a request for the requested asset is received, and determining a characteristic time of the cache device, when the cache evicts an asset.

The method may further include determining the characteristic time of the first cache device by, initializing the characteristic time of the first cache device as a value which is higher than the initialized value of the average inter-arrival time of the first asset with respect to the first cache device, and updating the characteristic time of the first cache device based on exponentially weighted moving average of periods of time assets cached at the first cache device are cached before being evicted from the first cache device in accordance with a least recently used (LRU) cache eviction policy.

The method may further include gently increasing the characteristic time of the first cache device by applying a gentle increase operation on the characteristic time of the first cache device, when the first cache evicts an asset.

The method may further include determining the average inter-arrival time of the first asset with respect to the first cache device by, initializing the average inter-arrival time of the first asset with respect to first cache device as a value lower than the initialized value of the characteristic value of the first cache device, and updating the average inter-arrival time of the first asset with respect to the first cache device based on exponentially weighted moving average of periods of time between consecutive receipts of requests, at the first cache device, to send the first asset to another device.

The method may further include assigning the first asset to a first database, when an initial request for the first asset is received at the first cache device, when a second request is received consecutively with respect to the initial request, determining an inter-arrival time of the first asset based on times at which the initial and second requests were received at the first cache device, and assigning the first asset to an inter-arrival time database, the inter-arrival time database storing arrival times of requests corresponding to assets, the inter-arrival time database being different that the first database; and demoting the first asset from the inter-arrival database to the first database when, the inter-arrival time of the first asset becomes greater than a reference value, or the inter-arrival time of the first asset is the largest inter-arrival time among inter-arrival times of assets currently assigned to the inter-arrival time data base at a point in time when a new asset is added to the inter-arrival time database and a total number of the assets currently assigned to the inter-arrival time database is greater than database capacity value.

According to one or more example embodiments, a first cache device may include a processing unit including a processor, the first cache device being programmed to perform, with the processor, operations including, receiving, at the first cache device, a request to send a first asset to a second device; determining whether the first asset is stored at the first cache device; when the determining whether the first asset is stored at the first cache device indicates that first asset is not stored at the first cache device, obtaining, at the first cache device, the first asset, performing a comparison operation based on an average inter-arrival time of the first asset with respect to the first cache device and a characteristic time of the first cache device, the characteristic time of the first cache device being an average period of time assets cached at the first cache device are cached before being evicted from the first cache device, and determining whether or not to cache the obtained first asset at the first cache device based on the comparison; and sending the obtained first asset to the second device.

The operations the first cache is programmed to perform may further include, determining, with respect to the first cache device, an average inter-arrival time of a requested asset, when a request for the requested asset is received, and determining a characteristic time of the first cache device, when the cache evicts an asset.

The operations the first cache is programmed to perform may further include, determining the characteristic time of the first cache device by, initializing the characteristic time of the first cache device as a value which is higher than the initialized value of the average inter-arrival time of the first asset with respect to the first cache device, and updating the characteristic time of the first cache device based on exponentially weighted moving average of periods of time assets cached at the first cache device are cached before being evicted from the first cache device in accordance with a least recently used (LRU) cache eviction policy.

The updating the characteristic time of the first cache device further includes, gently increasing the characteristic time of the first cache device by applying a gentle increase operation on the characteristic time of the first cache device, when the first cache evicts an asset.

The operations the first cache is programmed to perform may further include determining the average inter-arrival time of the first asset with respect to first cache device by, initializing the average inter-arrival time of the first asset with respect to the first cache device as a large lower than the initialized value of the characteristic value of the first cache device, and updating the average inter-arrival time of the first asset with respect to the first cache device based on exponentially weighted moving average of periods of time between consecutive receipts of requests, at the first cache device, to send the first asset to another device.

The operations the first cache is programmed to perform may further include, assigning the first asset to a first database, when an initial request for the first asset is received at the first cache device, when a second request is received consecutively with respect to the initial request, determining an inter-arrival time of the first asset based on times at which the initial and second requests were received at the first cache device, and assigning the first asset to an inter-arrival time database, the inter-arrival time database storing arrival times of requests corresponding to assets, the inter-arrival time database being different that the first database; and demoting the first asset from the inter-arrival database to the first database when, the inter-arrival time of the first asset becomes greater than a reference value, or the inter-arrival time of the first asset is the largest inter-arrival time among inter-arrival times of assets currently assigned to the inter-arrival time data base at a point in time when a new asset is added to the inter-arrival time database and a total number of the assets currently assigned to the inter-arrival time database is greater than database capacity value.

According to one or more example embodiments, a content distribution system may include a plurality of first cache devices, the plurality of first cache devices being divided into a plurality of hierarchy levels, each of the plurality of first caches devices being programmed to perform a first caching operation, respectively, such that, for each one of the plurality of first caching devices, the first caching operation includes, receiving, at the first cache device, a request to send a first asset to a second device; determining whether the first asset is stored at the first cache device; when the determining whether the first asset is stored at the first cache device indicates that first asset is not stored at the first cache device, obtaining, at the first cache device, the first asset, performing a comparison operation based on an average inter-arrival time of the first asset with respect to the first cache device and a characteristic time of the first cache device, the characteristic time of the first cache device being an average period of time between receipt of last requests for, and eviction of, assets cached at the first cache device, and determining whether or not to cache the obtained first asset at the first cache device based on the comparison; and sending the obtained first asset to the second device.

According to one or more example embodiments, a method of operating a content distribution network, the content distribution network including a plurality of first cache devices, the plurality of first cache devices being divided into a plurality of hierarchy levels, may include performing a first caching operation for each of the plurality of first cache devices, respectively, such that, for each one of the plurality of first caching devices divided into the plurality of hierarchy levels, the first caching operation includes, receiving, at the first cache device, a request to send a first asset to a second device; determining whether the first asset is stored at the first cache device; when the determining whether the first asset is stored at the first cache device indicates that first asset is not stored at the first cache device, obtaining, at the first cache device, the first asset, performing a comparison operation based on an average inter-arrival time of the first asset with respect to the first cache device and a characteristic time of the first cache device, the characteristic time of the first cache device being an average period of time between receipt of last requests for, and eviction of, assets cached at the first cache device, and determining whether or not to cache the obtained first asset at the first cache device based on the comparison; and sending the obtained first asset to the second device.

## BRIEF DESCRIPTION OF THE DRAWINGS

At least some example embodiments will become more fully understood from the detailed description provided below and the accompanying drawings, wherein like elements are represented by like reference numerals, which are given by way of illustration only and thus are not limiting of example embodiments and wherein:

FIG. 1 is a diagram illustrating a portion of a data network according to example embodiments.

FIG. 2A is a diagram illustrating the organization of a hierarchical cache system.

FIG. 2B is a diagram illustrating an example structure of a network element according to one or more example embodiments.

FIG. 3 is a flow chart illustrating an example method of operating a network element to perform hierarchical caching of online media.

## DETAILED DESCRIPTION OF EXAMPLE EMBODIMENTS

Various example embodiments will now be described more fully with reference to the accompanying drawings in which some example embodiments are shown.

Detailed illustrative embodiments are disclosed herein. However, specific structural and functional details disclosed herein are merely representative for purposes of describing at least some example embodiments. Example embodiments may, however, be embodied in many alternate forms and should not be construed as limited to only the embodiments set forth herein.

Accordingly, while example embodiments are capable of various modifications and alternative forms, embodiments thereof are shown by way of example in the drawings and will herein be described in detail. It should be understood, however, that there is no intent to limit example embodiments to the particular forms disclosed, but on the contrary, example embodiments are to cover all modifications, equivalents, and alternatives falling within the scope of example embodiments. Like numbers refer to like elements throughout the description of the figures. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between", "adjacent" versus "directly adjacent", etc.).

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising,", "includes" and/or "including", when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Exemplary embodiments are discussed herein as being implemented in a suitable computing environment. Although not required, exemplary embodiments will be described in the general context of computer-executable instructions, such as program modules or functional processes, being executed by one or more computer processors or CPUs. Generally, program modules or functional processes include routines, programs, objects, components, data structures, etc. that performs particular tasks or implement particular abstract data types.

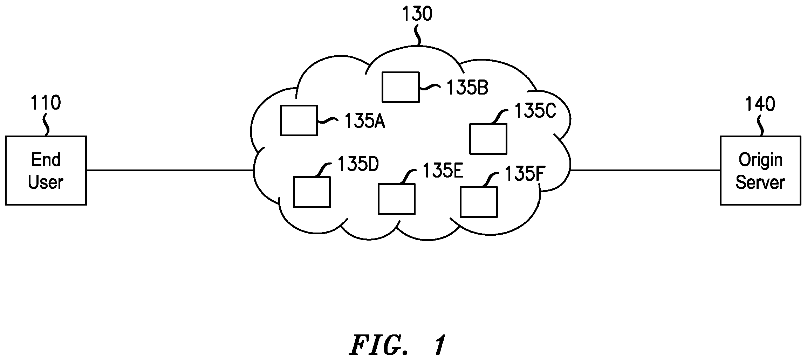

The program modules and functional processes discussed herein may be implemented using existing hardware in existing communication networks. For example, program modules and functional processes discussed herein may be implemented using existing hardware at existing network elements or control nodes (e.g., an eNB shown in FIG. 1). Such existing hardware may include one or more digital signal processors (DSPs), application-specific-integrated-circuits (ASICs), field programmable gate arrays (FPGAs) computers or the like.

In the following description, illustrative embodiments will be described with reference to acts and symbolic representations of operations (e.g., in the form of flowcharts) that are performed by one or more processors, unless indicated otherwise. As such, it will be understood that such acts and operations, which are at times referred to as being computer-executed, include the manipulation by the processor of electrical signals representing data in a structured form. This manipulation transforms the data or maintains it at locations in the memory system of the computer, which reconfigures or otherwise alters the operation of the computer in a manner well understood by those skilled in the art.

Example Network Architecture

FIG. 1 illustrates a portion of a data network 100 according to one or more example embodiments. Communications network 100 includes an end user 110, a content distribution network (CDN) 130 and an origin server 140.

The end user 110 may be embodied by, for example, an electronic user device examples of which include a mobile device, smart phone, laptop, tablet, or a personal computer. The end user 110 is capable of receiving content stored at the origin server 140 via CDN 130. The end user 110, the CDN 130 and the origin server 140 may be connected to each other through, for example, the internet.

The CDN 130 includes caches 135A-F. Caches 135A-F each include storage for storing media content. Caches 135A-F may be embodied, together, in groups, or individually in, for example, servers, routers, or wireless communications network components including, for example, base stations (BSs), evolved node Bs (eNBs), or a radio network controllers (RNCs). Though CDN 130 is illustrated as only including six caches 135A-F, the CDN 130 may include any number of caches. Further, in the example illustrated in FIG. 1, the origin server 140 is separate from the CDN 130. However, according to one or more example embodiments, the origin server 140 may be considered part of the CDN 130.

The origin server 140 is a server that provides content in response to content requests. For example, the origin server 140 may store content corresponding to one or more videos which may be requested by the end user 110 for streaming. In this case, the origin server 140 may receive content requests associated with the particular videos, for example from a cache within the CDN 130, and the origin server 140 may respond to the requests by providing the requested content. Though, for the purpose of simplicity, only one origin server 140 is illustrated, data network 100 may include any number of origin servers.

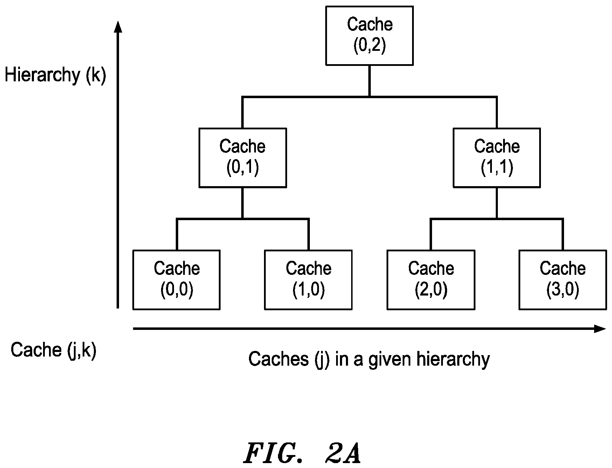

The caches in the CDN 130 may be organized in a hierarchical cache structure. FIG. 2A is a diagram illustrating an example organization of a hierarchical cache system. As is illustrated in FIG. 2A, caches in a hierarchical cache system may be organized in a tree structure. Each cache in FIG. 2A has an index 'j' and a hierarchy level 'k' denoted by the coordinates (j,k). Accordingly, the lowest hierarchy level, k=0, includes four caches, cache (0,0), cache (1,0), cache (2,0), and cache (3,0). The next highest hierarchy level, k=1, includes 2 caches, cache (0,1), and cache (1,1). The highest hierarchy level, k=2, includes 1 cache, cache (0,2). Cache (0,2) may be the parent of cache (0,1) and cache (1,1). Cache (0,1) may be the parent of cache (0,0) and cache (1,0). Cache (1,1) may be the parent of cache (2,0) and cache (3,0). Every cache that has a parent cache is a child cache with respect to the parent cache. Further, caches in a hierarchical cache system that are not parent caches may be referred to as 'leaf' caches. For example, in the tree structure shown in FIG. 2A, the caches of hierarchy level k=0 (i.e., cache (0,0), cache (1,0), cache (2,0), and cache (3,0)) are examples of leaf caches. When a child cache in a hierarchical cache system experiences a cache miss with respect to a requested asset, the child cache may communicate with the parent cache of the child cache to determine whether or not the parent cache has the requested asset. If the parent cache does not have the requested asset, the parent cache may then communicate with a higher level cache or an origin server to obtain the requested asset, before providing the requested asset to the child cache.

As used herein, the term "asset" refers to data that may be stored in a cache or provided by an origin server, and may be requested by a user. For example, with respect to online video, an example of an asset is a 2-10 second chunk of video data stored at an origin server, that may be requested by a user and may be stored at one or more caches.

According to one or more example embodiments, the caches in the CDN 130 may be organized in the hierarchical cache structure shown in FIG. 2A. For example the caches 135A-F in FIG. 1 may correspond, respectively, to cache (0,2), cache (0,1), cache (1,1), cache (0,0), cache (1,0), and cache (2,0).

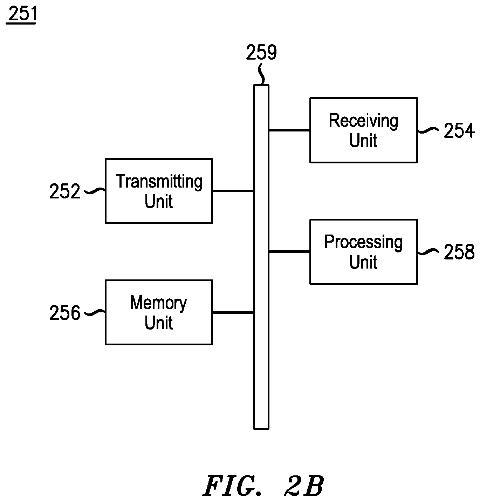

An example structure of the network elements of data network 100 will now be discussed below with reference to FIG. 2B.

Example Network Element Structure

FIG. 2B is a diagram illustrating an example structure of a network element 251. According to example embodiments, any or all network elements in the data network 100, including for example the end user 110, the caches 135A-F, and the origin server 140, may have the same structure and operation described below with respect to network element 251.

Referring to FIG. 2B, the network element 251 may include, for example, a data bus 259, a transmitting unit 252, a receiving unit 254, a memory unit 256, and a processing unit 258.

The transmitting unit 252, receiving unit 254, memory unit 256, and processing unit 258 may send data to and/or receive data from one another using the data bus 259.

The transmitting unit 252 is a device that includes hardware and any necessary software for transmitting signals including, for example, control signals or data signals via one or more wired and/or wireless connections to other network elements in data network 100.

The receiving unit 254 is a device that includes hardware and any necessary software for receiving wireless signals including, for example, control signals or data signals via one or more wired and/or wireless connections to other network elements in the data network 100.

The memory unit 256 may be any device capable of storing data including magnetic storage, flash storage, etc.

The processing unit 258 may be any device capable of processing data including, for example, a processor.

According to at least one example embodiment, any operations described herein, for example with reference to any of FIGS. 1-3, as being performed by any one of a user (e.g., the end user 110), a cache (e.g., caches 135A-F), and a server (e.g., the origin server 140) may be performed by an electronic device having the structure of the network element 251 illustrated in FIG. 2B. For example, according to at least one example embodiment, the network element 251 may be programmed, in terms of software and/or hardware, to perform any or all of the functions described herein as being performed by a user, a cache, or server. Consequently, each of the end user 110, the caches and the servers described herein may be embodied as special purpose computers.

Examples of the network element 251 being programmed, in terms of software, to perform any or all of the functions described herein as being performed by any of a user, a cache, or server described herein will now be discussed below. For example, the memory unit 256 may store a program including executable instructions corresponding to any or all of the operations described herein with reference to FIGS. 1-3 as being performed by a user, a cache, or server. According to at least one example embodiment, additionally or alternatively to being stored in the memory unit 256, the executable instructions may be stored in a computer-readable medium including, for example, an optical disc, flash drive, SD card, etc., and the network element 251 may include hardware for reading data stored on the computer readable-medium. Further, the processing unit 258 may be a processor configured to perform any or all of the operations described herein with reference to FIGS. 1-3 as being performed by a user, a cache, or server, for example, by reading and executing the executable instructions stored in at least one of the memory unit 256 and a computer readable storage medium loaded into hardware included in the network element 251 for reading computer-readable mediums.

Examples of the network element 251 being programmed, in terms of hardware, to perform any or all of the functions described herein as being performed by a user, a cache, or server will now be discussed below. Additionally or alternatively to executable instructions corresponding to the functions described with reference to FIGS. 1-3 as being performed by a user, a cache, or server being stored in a memory unit or a computer-readable medium as is discussed above, the processing unit 258 may include a circuit that has a structural design dedicated to performing any or all of the operations described herein with reference to FIGS. 1-3 as being performed by a user, a cache, or server. For example, the above-referenced circuit included in the processing unit 258 may be a FPGA or ASIC physically programmed to perform any or all of the operations described with reference to FIGS. 1-3 as being performed by a user, a cache, or server.

An overview of hierarchical caching according to one or more example embodiments will now be discussed below.

Overview of Hierarchical Caching According to One or More Example Embodiments

With respect to many conventional caching algorithms, some of the impediments to practical use may have been a perceived complexity of implementation of the algorithms which can impede throughput performance and an expectation that the value of additional caching performance gains such as increased hit-rate may be outweighed by factors such as ability to adapt to asset popularity changes.

One or more example embodiments use new caching algorithms for online video. The new caching algorithms have low implementation complexity; and have improved hit-rate and replacement rate. The new caching algorithms have been evaluated based on simulations that involve typical popularity of assets and realistic changes using video on-demand (VoD) statistics. Some studies have indicated that many assets are quite popular in the beginning of their lifecycle, but drop in popularity at an exponential rate and are a fraction of their popularity within days after their introduction. Based on these, not only hit-rate, but also byte bit-rate and replacement rate are used to evaluate caching algorithms according to one or more example embodiments. Though one or more example embodiments of caching algorithms are described herein with reference to caching online video, one or more example embodiments described herein for caching online video may also apply to other types of media transferred through communications networks like the internet including, for example, audio, pictures, video games, and 3-D objects and models.

Example Method of Providing Hierarchical Caching According to One or More Example Embodiments

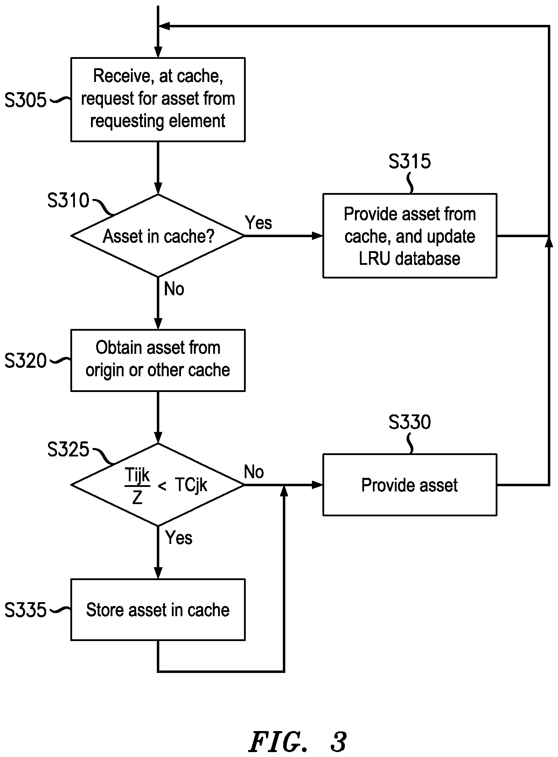

A method of providing hierarchical caching according to one or more example embodiments will now be discussed with respect to FIG. 3 and with reference to examples in which online video data is being cached by the CDN 130 of FIG. 1. According to one or more example embodiments, the method of providing hierarchical caching illustrated in FIG. 3 is based on a hierarchical cache, like that shown in FIG. 2A, rather than a horizontally cooperative cache, because hierarchical caches may be more efficient for operator networks.

According to one or more example embodiments, a method of providing hierarchical caching uses a caching algorithm that works in a local manner in a given cache without the need for global information. Further, according to one or more example embodiments, a method of providing hierarchical caching uses a caching algorithm that is an *O(1)* algorithm with respect to the number of assets or nodes.

According to one or more example embodiments, a method of providing hierarchical caching uses a caching algorithm that is relatively quick to respond to changes in popularity when previously very popular assets drop their value quickly.

According to one or more example embodiments, a method of providing hierarchical caching uses a caching algorithm that provides improved hit-rate performance.

According to one or more example embodiments, a method of providing hierarchical caching uses a caching algorithm that does not use the size of an asset in the decision to evict as this may cause undesirable behaviour for online video.

According to one or more example embodiments, a method of providing hierarchical caching uses a caching algorithm that runs at each cache in a given hierarchy independent of the algorithm in other caches. Each cache estimates the inter-arrival time of each asset locally. Each cache also calculates its own characteristic time, which is defined as the average time an asset stays in cache before it is evicted. For example the characteristic time of a cache may be determined by the cache in accordance with known method using LRU, by determining the average of several eviction times corresponding to several assets where, for each asset, the eviction time for that asset may be determined when the cache is about to evict an asset, as the difference between the current time and the time that asset was last requested. One or more example embodiments of the above-referenced caching algorithm will now be discussed in greater detail below.

According to one or more example embodiments, a method of providing hierarchical caching uses a caching algorithm that evicts assets in accordance with the known LRU scheme. For example, according to one or more example embodiments, once the caching algorithm determines an asset is to be evicted form a cache, the asset selected for eviction is the least recently used asset.

Table 1 below describes variables that are defined for each asset.

Table 1

| | |
|---|---|
| i | Asset Number from 0 to N. |
| *j* | Cache number in a given level of hierarchy from 0 to P. |
| *k* | Cache hierarchy level from 0 to M, higher number is higher in hierarchy. |
| $T_{ijk}$ | Average inter-arrival time of asset i for cache j in hierarchy k. |

(continued)

| | |
|---|---|
| $P_{ijk}$ | Previous time asset i was seen in cache j in hierarchy k. |

Table 2 below describes variables that are defined for each cache.

Table 2

| | |
|---|---|
| $TC_{jk}$ | Characteristic time of cache j in hierarchy k. |
| $PL_{jk}$ | Last time this asset was seen in cache j in hierarchy k. This is part of the LRU function which leaves a timestamp for the last time request for an asset was seen in a cache. |
| $TS$ | Current time. |

Table 3 below describes variables that are defined for the whole cache hierarchy.

Table 3

| | |
|---|---|
| $W_{TC}$ | Weight for the exponential moving average for the characteristic time. Example values include 0.01 - 0.05. |
| $W_{IA}$ | Weight for the exponential moving average for the inter-arrival times. Example values include 0.01 - 0.05. |
| $GS$ | Gentle slope parameter on how quickly $TC_{jk}$ is increased over time. Example values include 0.001 - 0.0001. |

Table 4 below describes initial conditions that, according to one or more example embodiments, are set before the caching algorithm used by the method of providing hierarchical caching illustrated in FIG. 3 is run.

Table 4

| | |
|---|---|
| $P_{ijk}$ | Set all to the current time. |
| $T_{ijk}$ | Set all to a large number, but smaller than the number used for initial value for the characteristic times $TC_{jk}$. This allows all assets to be cached until $TC_{jk}$ is updated to a real value. An example would set this number 100 times higher than the largest expected inter-arrival time. |
| $TC_{jk}$ | Set all to a large number, larger than the number for $T_{ijk}$. Typically set this at 10 times the $T_{ijk}$ number. |

Equation (1) below illustrates the manner in which $TC_{jk}$, the characteristic time value of a cache (j,k), is calculated.

$$TC_{jk} = w_{TC} \times \left(TS - P_{ijk}\right) + \left(1 - w_{TC}\right) \times TC_{jk} \qquad (1)$$

Equation (1) calculates the characteristic time $TC_{jk}$ as an exponential moving average of times assets stay in cache (j,k) without being requested before being evicted from the cache (j,k), for example, in accordance with an LRU cache eviction policy. For example, the characteristic time $TC_{jk}$ as an exponential moving average of times between receipt last requests for assets in cache (j,k) and eviction of the assets from cache (j,k). According to one or more example embodiments, in accordance with known LRU methods for operating caches, the value $P_{ijk}$ is updated to the current time whenever a cache receives a request for the $i^{th}$ asset by the LRU function itself.

Equation (2) below illustrates the manner in which the average the inter-arrival time of asset i for a cache (j,k), $T_{ijk}$, is calculated. According to one or more example embodiments, the value $T_{ijk}$ may be calculated whenever an asset is requested from any cache, whether it is a leaf cache or a higher layer cache.

$$T_{ijk} = w_{IA} \times \left(TS - P_{ijk}\right) + \left(1 - w_{IA}\right) \times T_{ijk} \qquad (2)$$

Equation (2) calculates an exponential moving average of the inter-arrival time of asset i using the weight $\omega_{IA}$.

According to one or more example embodiments, after calculating the value $TC_{jk}$ in accordance with equation (1), the characteristic time $TC_{jk}$ is gently increased so that the characteristic time $TC_{jk}$ does not get stuck at a low number. The characteristic time $TC_{jk}$ is gently increased in accordance with equation (3) below.

$$TC_{jk} = TC_{jk} + GS \times (TS - PL_{jk}) \qquad (3)$$

According to one or more example embodiments, after gently increasing the value $TC_{jk}$ in accordance with equation (3), the current value for $PL_{jk}$ is set to the current time as is illustrated by equation (4) below.

$$PL_{jk} = TS \qquad (4)$$

An example of a caching algorithm used by the method of providing hierarchical caching according to one or more example embodiments is described below in the form of pseudo code by algorithm 1. According to one or more example embodiments, algorithm 1 may be performed, individually, by each cache in the hierarchical tree structure of CDN 130. For example, every time a cache from among the caches of the CDN 130 receives a request for an asset $i$, the cache performs Algorithm 1 to determine if the requested asset needs to be cached by the cache.

---

**Algorithm 1**

Update asset counts $T_{ijk}$; as defined earlier

**If** (asset already in cache) **begin**
    Deliver asset $i$ to client or lower layer cache

---

    Update LRU Database ($P_{ijk}$) with timestamp for that asset; this is as done today in LRU based caches
    **end**
**else if** $\left(T_{ijk} < TC_{jk}\right)$ **begin**
    Request asset $i$ from upstream cache or origin
    Deliver asset $i$ to client or lower layer cache
    Store asset $i$ in the local cache
    **end**
    **else begin**
    Request asset $i$ from upstream cache or origin
    Deliver asset $i$ - note here we do not store this asset
    **end**

---

An example use of Algorithm 1 will be discussed in greater detail below with respect to FIG. 3. FIG. 3 is a flow chart illustrating an example method of operating a network element to perform hierarchical caching of online media. FIG. 3 will be explained from the perspective of cache 135B which, as is explained above with reference to FIG. 2A, corresponds to cache (0,1) in FIG 2A (i.e., the $0^{th}$ cache in hierarchy level k=1).

Referring to FIG. 3, in step S305, a request for an asset is received at the cache. For example, in step S305, the cache 135B receives a request for an asset x. The cache 135B may receive the request for the asset x from one of the children caches of cache 135B (i.e., as is illustrated in FIG. 2A, the cache 135B is the parent to caches 135D and 135E, which correspond to cache (0,0) and cache (1,0) illustrated in FIG. 2A, respectively). The method shown in FIG. 3 will be explained with reference to an example where the cache 135B receives a request for the asset x from the cache 135D. For example, the cache 135D may send a request for the asset x to cache 135B in response to receiving, at the cache 135D, a request for the asset x from the end user 110. Accordingly, when the method shown in FIG. 3 is performed by the cache 135B when receiving a request for an asset x, i=x, j=0, and k=1.

As is shown in Algorithm 1, upon receiving the request for the asset x in step S305, the cache 135B may calculate the value $T_{ijk}$ using equations (2),. Next the cache may set the value for $P_{ijk}$ as the current time. Next, the cache 135B may proceed to step S310. Whenever the cache 135B evicts an asset, it may calculate the value $TC_{jk}$ using equation (1) and then the cache 135B may gently increase the value $TC_{jk}$ using equation (3).

In step S310, the cache determines whether or not the asset for which the request was received in step S305 is stored (i.e., cached) in the cache. For example, in step S310, the cache 135B may determine whether the asset x is already cached in the cache 135B. If the asset the asset x is currently stored in the cache 135B, then the cache 135B proceeds to step S315.

In step S315, the cache provides the asset requested in step S305 and updates the LRU database of the cache. For example, in step S315, the cache 135B may provide the asset x to the network element that requested the asset in step S310, the cache 135D. Further, in accordance with known LRU methods of operating a cache, the cache 135D may update an LRU database within the cache 135D (e.g., within the memory 256 of the cache 135D) that stores timestamps indicating, respectively, times of the most recent uses of each the assets presently stored in the cache.

Returning to step S310, if the cache determines in step S310 that the asset requested in step S305 is not included in the cache, the cache proceeds to step S320. For example, if, in step S310, the cache 135B determines that the asset x is not currently stored in the cache 135B, then the cache 135B proceeds to step S320.

In step S320, the cache retrieves the asset requested in step S305. For example, in step S320, the cache 135B may send a request for the asset x to the parent of the cache 135B, cache 135A. In response to the request sent by the cache 135B, the cache 135B may receive the asset x from the cache 135A. For example, the cache 135A may be storing the asset x already, or the cache 135A may retrieve the asset x from the origin server 140 before providing the asset x to the cache 135B.

Next, in step S325, the cache performs a comparison based on the values $TC_{jk}$ and $T_{ijk}$ and determines whether or not to store the asset x based on the comparison. For example, in step S325, the cache 135B may compare the value $TC_{jk}$ to the value $T_{ijk}$ in accordance with equation (5) below.

$$\left( T_{ijk} < TC_{jk} \right)$$

$$(5)$$

If the result of the comparison operation in step S325 is true, the cache 135B may proceed to step S335 before proceeding to step S330. In step S335, the cache 135B stores the asset x in the cache 135B. In step S330, the cache 135B provides the asset to the network element that requested the asset, cache 135D.

If the result of the comparison operation in step S325 is false, the cache 135B may proceed directly to step S330 without proceeding to step S335. Accordingly, if the result of the comparison operation in step S325 is false, the cache 135B may provide the asset x to the cache 135D without caching the asset x in the cache 135B. Thus, according to one or more example embodiments, caches in the CDN 130 may determine whether or not to cache a retrieved asset in accordance with the comparison defined by equation (5).

After providing the requested asset x in step S330, the cache 135B returns to step S305 to await receipt of the next asset request.

Though FIG. 3 is explained from the perspective of the cache 135B, the operations discussed above with respect to the cache 135B may be performed by any cache in the CDN 130. For example, all caches in the CDN may perform the operations discussed above with respect to the cache 135B concurrently.

A new database, which may be included in caches of the CDN 130 (e.g., within the memories 256 of the caches of the CDN 130) in addition to the LRU databases of the caches, will now be discussed below.

Large Asset Inter-arrival Time Database

As is discussed above, caches of the CDN 130 may include LRU databases in accordance with known LRU methods for operating caches. Further, each of the caches of the CDN 130 may also include a database for storing inter-arrival times of various assets for example, for calculating the average inter-arrival of asset i, $T_{ijk}$.

Given that the number of assets in a library can be very large, sometimes much larger than the number of assets that can be stored in a cache, it may be desirable to use more than one database to store the inter-arrival time statistics. For example, according to one or more example embodiments, the caches of the CDN 130 may include a main database of inter-arrival times and an additional database of inter-arrival times. In accordance with one or more example embodiments, the main database of inter-arrival times for a cache does not contain inter-arrival times that are more than a few times the $TC_{jk}$ value for that cache; for example 3 times. According to one or more example embodiments, the exact value above which inter-arrival times are not included in the main inter-arrival time data base may be based on the popularity distribution of assets stored at that cache.

The additional database may be a "one occurrence" database that is used to store assets which have seen only a single request so far and assets that are demoted from the main inter-arrival time database. For example, when a cache sees a second request for an asset, the cache may calculate an inter-arrival time based on the timings of the first and second requests, and the cache may place that asset into the main inter-arrival time database based on the newly calculated inter-arrival time. Further, upon placing asset which has the newly calculated inter-arrival time into the main database, the asset with the largest inter-arrival time in the main database may be removed from the main database. In order to return to the main database, the removed asset may need to enter the "one occurrence" database first, and then be promoted to the main inter-arrival database in the manner discussed above.

The additional database may be a "one occurrence" database that is used to store assets which have seen only a single request so far. When the cache sees a second request for an asset in the "one occurrence" database, the cache may calculate an inter-arrival time based on the timings of the first and second requests, then the cache may place that asset into the main inter-arrival time database based on the newly calculated inter-arrival time while also deleting that entry from the "one occurrence" database. Further, upon placing asset which has the newly calculated inter-arrival time into the main database, the asset that was the least recently used in the main database may be removed from the main database. Least recently used means the asset whose last request was the oldest among all assets. In order to return to the main database, the removed asset may need to enter the "one occurrence" database first, and then be promoted to the main inter-arrival database in the manner discussed above.

**Claims**

1. A method comprising:

    receiving, at a first cache device (135A-D), a request to send a first asset to a second device (110, 135A-D);
    determining whether the first asset is stored at the first cache device;
    when the determining whether the first asset is stored at the first cache device indicates that first asset is not stored at the first cache device,

        obtaining, at the first cache device, the first asset,
        performing a comparison operation based on an average inter-arrival time of the first asset with respect to the first cache device and a characteristic time of the first cache device,
        the average inter-arrival time being based on exponentially weighted moving average of periods of time between consecutive receipts of requests, at the first cache device, to send the first asset to another device, the characteristic time of the first cache device being an average period of time between receipt of last requests for, and eviction of, assets cached at the first cache device, and
        determining whether or not to cache the obtained first asset at the first cache device based on the comparison operation; and sending the obtained first asset to the second device.

2. The method of claim 1, wherein,
    the first cache is one of a plurality of cache devices of a content distribution network (130), the plurality of cache devices being divided into a plurality of hierarchy levels, and
    the method further comprises:
    for each cache device of each hierarchy level, from among the plurality of cache devices divided into the plurality of hierarchy levels,

        determining, with respect to the cache device, an average inter-arrival time of a requested asset, when a request for the requested asset is received, and
        determining a characteristic time of the cache device, when the cache evicts an asset.

3. The method of claim 1, further comprising:
    determining the characteristic time of the first cache device by,

        initializing the characteristic time of the first cache device as a value which is higher than the initialized value of the average inter-arrival time of the first asset with respect to the first cache device, and
        updating the characteristic time of the first cache device based on exponentially weighted moving average of periods of time between receipt of last requests for, and eviction of, assets cached at the first cache device, in accordance with a least recently used (LRU) cache eviction policy.

4. The method of claim 1, further comprising:
determining the average inter-arrival time of the first asset with respect to the first cache device by,

initializing the average inter-arrival time of the first asset with respect to first cache device as a value lower than the initialized value of the characteristic value of the first cache device, and
updating the average inter-arrival time of the first asset with respect to the first cache device based on exponentially weighted moving average of periods of time between consecutive receipts of requests, at the first cache device, to send the first asset to another device.

5. The method of claim 1 further comprising:

assigning the first asset to a first database, when an initial request for the first asset is received at the first cache device,
when a second request is received consecutively with respect to the initial request,

determining an inter-arrival time of the first asset based on times at which the initial and second requests were received at the first cache device, and
assigning the first asset to an inter-arrival time database, the inter-arrival time database storing arrival times of requests corresponding to assets, the inter-arrival time database being different than the first database; and

removing the second asset from the inter-arrival database when,

the inter-arrival time of the second asset becomes greater than a reference value, or
the last request of the second asset is the oldest among request times of all assets currently assigned to the inter-arrival time data base at a point in time when a new asset is added to the inter-arrival time database and a total number of the assets currently assigned to the inter-arrival time database is greater than database capacity value.

6. A first cache device (135A-D, 251) comprising:

a processing unit (258) including a processor,
the first cache device being programmed to perform, with the processor, operations including,

receiving, at the first cache device, a request to send a first asset to a second device (110, 135A-D, 251);
determining whether the first asset is stored at the first cache device;
when the determining whether the first asset is stored at the first cache device indicates that first asset is not stored at the first cache device,

obtaining, at the first cache device, the first asset, performing a comparison operation based on an average inter-arrival time of the first asset with respect to the first cache device and a characteristic time of the first cache device,
the average inter-arrival time being based on exponentially weighted moving average of periods of time between consecutive receipts of requests, at the first cache device, to send the first asset to another device,
the characteristic time of the first cache device being an average period of time between receipt of last requests for, and eviction of, assets cached at the first cache device, and
determining whether or not to cache the obtained first asset at the first cache device based on the comparison operation; and

sending the obtained first asset to the second device.

7. The first cache of claim 6, wherein the operations further include, determining the characteristic time of the first cache device by, initializing the characteristic time of the first cache device as a value which is higher than the initialized value of the average inter-arrival time of the first asset with respect to the first cache device, and updating the characteristic time of the first cache device based on exponentially weighted moving average of periods of time between receipt of last requests for, and eviction of, assets cached at the first cache device, in accordance with a least recently used (LRU) cache eviction policy.

8. The first cache of claim 6, wherein the operations the first cache is programmed to perform further include, determining the average inter-arrival time of the first asset with respect to first cache device by,

initializing the average inter-arrival time of the first asset with respect to the first cache device as a value lower than the initialized value of the characteristic value of the first cache device, and
updating the average inter-arrival time of the first asset with respect to the first cache device based on exponentially weighted moving average of periods of time between consecutive receipts of requests, at the first cache device, to send the first asset to another device.

9. A method of operating a content distribution network (130), the content distribution network including a plurality of first cache devices (135A-D), the plurality of first cache devices being divided into a plurality of hierarchy levels, the method comprising:
performing a first caching operation for each of the plurality of first cache devices, respectively, such that, for each one of the plurality of first caching devices divided into the plurality of hierarchy levels, the first caching operation includes the steps of the method of claim 1.

10. A content distribution system (130) comprising:

a plurality of first cache devices (135A-D) according to claim 6,
the plurality of first cache devices being divided into a plurality of hierarchy levels.

**Patentansprüche**

1. Verfahren, umfassend:

Empfangen einer Anforderung an einer ersten Cachespeichervorrichtung (135A-D), um ein erstes Objekt an eine zweite Vorrichtung (110, 135A-D) zu senden;
Bestimmen, ob das erste Objekt auf der ersten Cachespeichervorrichtung gespeichert ist;
wenn das Bestimmen, ob das erste Objekt auf der ersten Cachespeichervorrichtung gespeichert ist, angibt, dass das erste Objekt nicht auf der ersten Cachespeichervorrichtung gespeichert ist,
Erhalten des ersten Objekts auf der ersten Cachespeichervorrichtung,
Durchführen eines Vergleichsvorgangs basierend auf einer durchschnittlichen Interankunftszeit des ersten Objekts in Bezug auf die erste Cachespeichervorrichtung und einer charakteristischen Zeit der ersten Cachespeichervorrichtung,
wobei die durchschnittliche Interankunftszeit auf dem exponentiell gewichteten gleitenden Durchschnitt der Zeitspannen zwischen aufeinanderfolgenden Empfängen von Anforderungen auf der ersten Cachespeichervorrichtung basiert, um das erste Objekt an eine andere Vorrichtung zu senden,
wobei die charakteristische Zeit der ersten Cachespeichervorrichtung eine durchschnittliche Zeitspanne zwischen dem Empfang der letzten Anforderungen und der Räumung von Objekten ist, die in der ersten Cachespeichervorrichtung zwischengespeichert sind, und
Bestimmen, ob das auf der ersten Cachespeichervorrichtung erhaltene erste Objekt basierend auf dem Vergleichsvorgang zwischenzuspeichern ist oder nicht; und
Senden des ersten erhaltenen Objekts an die zweite Vorrichtung.

2. Verfahren nach Anspruch 1, wobei
der erste Cachespeicher eine einer Vielzahl von Cachespeichervorrichtungen eines Inhaltsverteilungsnetzwerks (130) ist, wobei die Vielzahl von Cachespeichervorrichtungen in eine Vielzahl von Hierarchieebenen unterteilt ist, und wobei das Verfahren ferner umfasst:
für jede Cachespeichervorrichtung jeder Hierarchieebene unter der Vielzahl von Cachespeichervorrichtungen, die in die Vielzahl von Hierarchieebenen unterteilt sind,

Bestimmen einer durchschnittlichen Interankunftszeit eines angeforderten Objekts in Bezug auf die Cachespeichervorrichtung, wenn eine Anforderung des angeforderten Objekts empfangen wird, und
Bestimmen eines charakteristischen Zeitpunkts der Cachespeichervorrichtung, zu dem der Cachespeicher ein Objekt ausräumt.

3.  Verfahren nach Anspruch 1, ferner umfassend:
    Bestimmen der charakteristischen Zeit der ersten Cachespeichervorrichtung durch

    Initialisieren der charakteristischen Zeit der ersten Cachespeichervorrichtung als einen Wert, der höher als der initialisierte Wert der durchschnittlichen Interankunftszeit des ersten Objekts in Bezug auf die erste Cachespeichervorrichtung ist, und
    Aktualisieren der charakteristischen Zeit der ersten Cachespeichervorrichtung basierend auf dem exponentiell gewichteten gleitenden Durchschnitt der Zeitspannen zwischen dem Empfang der letzten Anforderungen und der Räumung der auf der ersten Cachespeichervorrichtung zwischengespeicherten Objekte gemäß einer Richtlinie zur Cacheräumung nach dem Prinzip der geringsten kürzlichen Verwendung (LRU).

4.  Verfahren nach Anspruch 1, ferner umfassend:

    Bestimmen der durchschnittlichen Interankunftszeiten des ersten Objekts in Bezug auf die erste Cachespeichervorrichtung durch,
    Initialisieren der durchschnittlichen Interankunftszeit des ersten Objekts in Bezug auf die erste Cachespeichervorrichtung als einen Wert, der niedriger als der initialisierte Wert des charakteristischen Wertes der ersten Cachespeichervorrichtung ist, und
    Aktualisieren der durchschnittlichen Interankunftszeit des ersten Objekts in Bezug auf die erste Cachespeichervorrichtung basierend auf dem exponentiell gewichteten gleitenden Durchschnitt der Zeitspannen zwischen aufeinanderfolgenden Empfängen von Anforderungen auf der ersten Cachespeichervorrichtung zum Senden des ersten Objekts an eine andere Vorrichtung.

5.  Verfahren nach Anspruch 1, ferner umfassend:

    Zuweisen des ersten Objekts zu einer ersten Datenbank, wenn eine erste Anforderung des ersten Objekts auf der ersten Cachespeichervorrichtung empfangen wird,
    wenn eine zweite Anforderung aufeinanderfolgend in Bezug auf die erste Anforderung empfangen wird,
    Bestimmen einer Interankunftszeit des ersten Objekts basierend auf den Zeiten, zu denen die erste und zweite Anforderung auf der ersten Cachespeichervorrichtung empfangen wurden, und
    Zuweisen des ersten Objekts zu einer Interankunftszeitendatenbank, wobei die Interankunftszeitendatenbank Ankunftszeiten von Anforderungen entsprechend den Objekten speichert, wobei die Interankunftszeitendatenbank von der ersten Datenbank verschieden ist; und

    Entfernen des zweiten Objekts aus der Interankunftszeitendatenbank,
    die Interankunftszeit des zweiten Objekts größer als ein Referenzwert wird, oder
    die letzte Anforderung des zweiten Objekts die älteste unter den Anforderungszeiten aller derzeit der Interankunftszeitendatenbank zugewiesenen Objekte zu einem Zeitpunkt ist, zu dem ein neues Objekt der Interankunftszeitendatenbank hinzugefügt wird und die Gesamtzahl der derzeit der Interankunftszeitendatenbank zugewiesenen Objekte größer als der Wert der Datenbankkapazität ist.

6.  Erste Cachespeichervorrichtung (135A-D, 251), umfassend:

    eine Verarbeitungseinheit (258) mit einem Prozessor,
    wobei die erste Cachespeichervorrichtung dazu programmiert ist, mit dem Prozessor Operationen durchzuführen, umfassend:

    Empfangen einer Anforderung auf einer ersten Cachespeichervorrichtung, um ein erstes Objekt an eine zweite Vorrichtung (110, 135A-D, 251) zu senden;
    Bestimmen, ob das erste Objekt auf der ersten Cachespeichervorrichtung gespeichert ist;
    wenn das Bestimmen, ob das erste Objekt auf der ersten Cachespeichervorrichtung gespeichert ist, angibt, dass das erste Objekt nicht auf der ersten Cachespeichervorrichtung gespeichert ist,
    Erhalten des ersten Objekts auf der ersten Cachespeichervorrichtung,
    Durchführen eines Vergleichsvorgangs basierend auf einer durchschnittlichen Interankunftszeit des ersten Objekts in Bezug auf die erste Cachespeichervorrichtung und einer charakteristischen Zeit der ersten Cachespeichervorrichtung,

wobei die durchschnittliche Interankunftszeit auf dem exponentiell gewichteten gleitenden Durchschnitt der Zeitspannen zwischen aufeinanderfolgenden Empfängen von Anforderungen auf der ersten Cachespeichervorrichtung basiert, um das erste Objekt an eine andere Vorrichtung zu senden,

wobei die charakteristische Zeit der ersten Cachespeichervorrichtung eine durchschnittliche Zeitspanne zwischen dem Empfang der letzten Anforderungen und der Räumung von Objekten ist, die in der ersten Cachespeichervorrichtung zwischengespeichert sind, und

Bestimmen, ob das auf der ersten Cachespeichervorrichtung erhaltene erste Objekt basierend auf dem Vergleichsvorgang zwischenzuspeichern ist oder nicht; und

Senden des ersten erhaltenen Objekts an die zweite Vorrichtung.

7. Erste Cachespeichervorrichtung nach Anspruch 6, wobei die Operationen ferner umfassen:

Bestimmen der charakteristischen Zeit der ersten Cachespeichervorrichtung durch

Initialisieren der charakteristischen Zeit der ersten Cachespeichervorrichtung als einen Wert, der höher als der initialisierte Wert der durchschnittlichen Interankunftszeit des ersten Objekts in Bezug auf die erste Cachespeichervorrichtung ist, und

Aktualisieren der charakteristischen Zeit der ersten Cachespeichervorrichtung basierend auf dem exponentiell gewichteten gleitenden Durchschnitt der Zeitspannen zwischen dem Empfang der letzten Anforderungen und der Räumung der auf der ersten Cachespeichervorrichtung zwischengespeicherten Objekte gemäß einer Richtlinie zur Cacheräumung nach dem Prinzip der geringsten kürzlichen Verwendung (LRU).

8. Erster Cachespeicher nach Anspruch 6, wobei die Operationen, für deren Ausführung der erste Cachespeicher programmiert ist, ferner umfassen:

Bestimmen der durchschnittlichen Interankunftszeit des ersten Objekts in Bezug auf die erste Cachespeichervorrichtung durch,

Initialisieren der durchschnittlichen Interankunftszeit des ersten Objekts in Bezug auf die erste Cachespeichervorrichtung als einen niedrigeren Wert als der initialisierte Wert des charakteristischen Wertes der ersten Cachespeichervorrichtung ist, und

Aktualisieren der durchschnittlichen Interankunftszeit des ersten Objekts in Bezug auf die erste Cachespeichervorrichtung basierend auf dem exponentiell gewichteten gleitenden Durchschnitt der Zeitspannen zwischen aufeinanderfolgenden Empfängen von Anforderungen auf der ersten Cachespeichervorrichtung zum Senden des ersten Objekts an eine andere Vorrichtung.

9. Verfahren zum Betreiben eines Inhaltsverteilungsnetzwerks (130), wobei das Inhaltsverteilungsnetzwerk eine Vielzahl von ersten Cachespeichervorrichtungen (135AD) aufweist, wobei die Vielzahl von ersten Cachespeichervorrichtungen in eine Vielzahl von Hierarchieebenen unterteilt ist, wobei das Verfahren umfasst:

Durchführen einer ersten Cachespeicheroperation für jede der Vielzahl von ersten Cachespeichervorrichtungen, sodass für jede der Vielzahl von ersten Cachespeichervorrichtungen, die in die Vielzahl von Hierarchieebenen unterteilt sind, die erste Cachespeicheroperation die Schritte des Verfahrens nach Anspruch 1 umfasst.

10. Inhaltsverteilungssystem (130), umfassend:

eine Vielzahl von ersten Cachespeichervorrichtungen (135A-D) nach Anspruch 6,

wobei die Vielzahl der ersten Cachespeichervorrichtungen in eine Vielzahl von Hierarchieebenen unterteilt ist.

## Revendications

1. Procédé comprenant :

la réception, au niveau d'un premier dispositif d'antémémoire (135A-D), d'une requête d'envoi d'un premier actif à un second dispositif (110, 135A-D) ;

la détermination que le premier actif est stocké ou non au niveau du premier dispositif d'antémémoire ;

quand la détermination que le premier actif est stocké ou non au niveau du premier dispositif d'antémémoire indique que le premier actif n'est pas stocké au niveau du premier dispositif d'antémémoire,

l'obtention, au niveau du premier dispositif d'antémémoire, du premier actif,

la réalisation d'une opération de comparaison basée sur un temps entre arrivées moyen du premier actif relativement au premier dispositif d'antémémoire et un temps caractéristique du premier dispositif d'antémémoire,

le temps entre arrivées moyen étant basé sur une moyenne mobile pondérée exponentiellement de périodes de temps entre des réceptions consécutives de requêtes, au niveau du premier dispositif d'antémémoire, d'envoi du premier actif à un autre dispositif,

le temps caractéristique du premier dispositif d'antémémoire étant une période de temps moyenne entre la réception de dernières requêtes d'actifs mis en antémémoire au niveau du premier dispositif d'antémémoire, et l'expulsion de ceux-ci, et

la détermination qu'il convient ou non de mettre en antémémoire le premier actif obtenu au niveau du premier dispositif d'antémémoire sur la base de l'opération de comparaison ; et
l'envoi du premier actif obtenu au second dispositif.

2. Procédé selon la revendication 1, dans lequel,

la première antémémoire est une d'une pluralité de dispositifs d'antémémoire d'un réseau de distribution de contenu (130), la pluralité de dispositifs d'antémémoire étant divisée en une pluralité de niveaux hiérarchiques, et le procédé comprend en outre :
pour chaque dispositif d'antémémoire de chaque niveau hiérarchique, parmi la pluralité de dispositifs d'antémémoire divisée en la pluralité de niveaux hiérarchiques,

la détermination, relativement au dispositif d'antémémoire, d'un temps entre arrivées moyen d'un actif requis, quand une requête de l'actif requis est reçue, et
la détermination d'un temps caractéristique du dispositif d'antémémoire, quand l'antémémoire expulse un actif.

3. Procédé selon la revendication 1, comprenant en outre :
la détermination du temps caractéristique du premier dispositif d'antémémoire en,

initialisant le temps caractéristique du premier dispositif d'antémémoire à une valeur qui est supérieure à la valeur initialisée du temps entre arrivées moyen du premier actif relativement au premier dispositif d'antémémoire, et
actualisant le temps caractéristique du premier dispositif d'antémémoire sur la base d'une moyenne mobile pondérée exponentiellement de périodes de temps entre la réception de dernières requêtes d'actifs mis en antémémoire au niveau du premier dispositif d'antémémoire, et l'expulsion de ceux-ci, conformément à une politique d'expulsion d'antémémoire sur le principe de l'actif le moins utilisé récemment (LRU).

4. Procédé selon la revendication 1, comprenant en outre :
la détermination du temps entre arrivées moyen du premier actif relativement au premier dispositif d'antémémoire en,

initialisant le temps entre arrivées moyen du premier actif relativement au premier dispositif d'antémémoire à une valeur inférieure à la valeur initialisée de la valeur caractéristique du premier dispositif d'antémémoire, et
actualisant le temps entre arrivées moyen du premier actif relativement au premier dispositif d'antémémoire sur la base d'une moyenne mobile pondérée exponentiellement de périodes de temps entre des réceptions consécutives de requêtes, au niveau du premier dispositif d'antémémoire, d'envoi du premier actif à un autre dispositif.

5. Procédé selon la revendication 1, comprenant en outre :

l'assignation du premier actif à une première base de données, quand une requête initiale du premier actif est reçue au niveau du premier dispositif d'antémémoire,
quand une seconde requête est reçue consécutivement relativement à la requête initiale,

la détermination d'un temps entre arrivées du premier actif sur la base des temps auxquels la requête initiale et la seconde requête ont été reçues au niveau du premier dispositif d'antémémoire, et
l'assignation du premier actif à une base de données de temps entre arrivées, la base de données de temps entre arrivées mémorisant des temps d'arrivée de requêtes correspondant à des actifs, la base de données de temps entre arrivées étant différente de la première base de données ; et

le retrait du second actif de la base de données de temps entre arrivées quand,

le temps entre arrivées du second actif dépasse une valeur de référence, ou
la dernière requête du second actif est la plus ancienne parmi les temps de requêtes de tous les actifs présentement assignés à la base de données de temps entre arrivées à un instant d'ajout d'un nouvel actif dans la base de données de temps entre arrivées et un nombre total d'actifs présentement assignés à la base de données de temps entre arrivées dépasse une valeur de capacité de base de données.

**6.** Premier dispositif d'antémémoire (135A-D, 251) comprenant :

une unité de traitement (258) comportant un processeur,
le premier dispositif d'antémémoire étant programmé pour réaliser, avec le processeur, des opérations comportant,

la réception, au niveau du premier dispositif d'antémémoire, d'une requête d'envoi d'un premier actif à un second dispositif (110, 135A-D, 251) ;
la détermination que le premier actif est stocké ou non au niveau du premier dispositif d'antémémoire ;
quand la détermination que le premier actif est stocké ou non au niveau du premier dispositif d'antémémoire indique que le premier actif n'est pas stocké au niveau du premier dispositif d'antémémoire,
l'obtention, au niveau du premier dispositif d'antémémoire, du premier actif,
la réalisation d'une opération de comparaison basée sur un temps entre arrivées moyen du premier actif relativement au premier dispositif d'antémémoire et un temps caractéristique du premier dispositif d'antémémoire,
le temps entre arrivées moyen étant basé sur une moyenne mobile pondérée exponentiellement de périodes de temps entre des réceptions consécutives de requêtes, au niveau du premier dispositif d'antémémoire, d'envoi du premier actif à un autre dispositif,
le temps caractéristique du premier dispositif d'antémémoire étant une période de temps moyenne entre la réception de dernière requêtes portant sur des actifs mis en antémémoire au niveau du premier dispositif d'antémémoire, et l'expulsion de ceux-ci, et
la détermination qu'il convient ou non de mettre en antémémoire le premier actif obtenu au niveau du dispositif d'antémémoire sur la base de l'opération de comparaison ; et

l'envoi du premier actif obtenu au second dispositif.

**7.** Première antémémoire selon la revendication 6, dans laquelle les opérations comportent en outre :

la détermination du temps caractéristique du premier dispositif d'antémémoire en,
l'initialisation du temps caractéristique du premier dispositif d'antémémoire à une valeur qui est supérieure à la valeur initialisée du temps entre arrivées moyen du premier actif relativement au premier dispositif d'antémémoire, et
l'actualisation du temps caractéristique du premier dispositif d'antémémoire sur la base d'une moyenne mobile pondérée exponentiellement de périodes de temps entre la réception de dernières requêtes d'actifs mis en antémémoire au niveau du premier dispositif d'antémémoire, et l'expulsion de ceux-ci, conformément à une politique d'expulsion d'antémémoire sur le principe de l'actif le moins utilisé récemment (LRU).

**8.** Première antémémoire selon la revendication 6, dans laquelle les opérations que doit réaliser la première antémémoire programmée comportent en outre :
la détermination du temps entre arrivées moyen du premier actif relativement au premier dispositif d'antémémoire en

initialisant le temps entre arrivées moyen du premier actif relativement au premier dispositif d'antémémoire à une valeur inférieure à la valeur initialisée de la valeur caractéristique du premier dispositif d'antémémoire, et
actualisant le temps entre arrivées moyen du premier actif relativement au premier dispositif d'antémémoire sur la base d'une moyenne mobile pondérée exponentiellement de périodes de temps entre des réceptions consécutives de requêtes, au niveau du premier dispositif d'antémémoire, d'envoi du premier actif à un autre dispositif.

9. Procédé d'exploitation d'un réseau de distribution de contenu (130), le réseau de distribution de contenu comportant une pluralité de premiers dispositifs d'antémémoire (135AD), la pluralité de premiers dispositifs d'antémémoire étant divisée en une pluralité de niveaux hiérarchiques, le procédé comprenant :
la réalisation d'une première opération de mise en antémémoire pour chacun de la pluralité de premiers dispositifs d'antémémoire, respectivement, de telle sorte que, pour chacun de la pluralité de premiers dispositifs d'antémémoire divisée en la pluralité de niveaux hiérarchiques, la première opération de mise en antémémoire comporte les étapes du procédé selon la revendication 1.

10. Système de distribution de contenus (130) comprenant :

une pluralité de premiers dispositifs d'antémémoire (135A-D) selon la revendication 6,
la pluralité de premiers dispositifs d'antémémoire étant divisée en une pluralité de niveaux hiérarchiques.

*FIG. 1*

140 — Origin Server

130

135A
135B
135C
135D
135E
135F

110 — End User

*FIG. 2A*

<u>251</u>

259

Transmitting Unit — 252

Memory Unit — 256

Receiving Unit — 254

Processing Unit — 258

*FIG. 2B*

S305 — Receive, at cache, request for asset from requesting element

S310 — Asset in cache? — Yes → S315 Provide asset from cache, and update LRU database

No

S320 — Obtain asset from origin or other cache

S325 — $\dfrac{Tijk}{Z} < TCjk$ — No → S330 Provide asset

Yes

S335 — Store asset in cache

*FIG. 3*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014280679 A1

- US 8312181 B1

**Non-patent literature cited in the description**

- **MELAZZI N BLEFARI et al.** *A General, Tractable and Accurate Model for a Cascade of LRU Caches*

- **AHLEHAGH HASTI et al.** *Video-Aware Scheduling and Caching in the Radio Access Network*